# EUROPEAN PATENT APPLICATION

(11) **EP 0 557 930 A1**
(43) Date of publication of application: **01.09.1993**
(21) Application number: 93102769.2
(22) Date of filing: 22.02.1993
(51) Int. Cl.: G01N 27/00, G01N 27/30

(54) **Device for electrochemical measurements in aqueous liquids**

(30) Priority: 25.02.1992 SE 9200552
(71) Applicant: ABB ATOM AB, S-721 83 Västeras (SE)
(72) Inventor: Halldén, Eva, S-723 36 Västeras (SE); Rosengren, Anders, S-724 71 Västeras (SE)
(74) Representative: Boecker, Joachim, Dr.-Ing.

(57) **Abstract**

A device for electrochemical measurements in aqueous liquids or liquid mixtures, which flow in a flow channel, which device comprises at least one reference electrode (21), preferably a hydrogen gas electrode, which is arranged in the form of an inert metal plate (21) in a flow of water saturated with hydrogen gas. An electrolysis electrode pair, in the form of two inert metal plates (22, 23) is connected to a voltage source (24) for decomposing water while forming hydrogen gas and oxygen gas. The electrolysis electrode (22) for generating hydrogen gas is arranged upstream of the hydrogen gas electrode (21) such that a water solution is obtained saturated with hydrogen gas near the hydrogen gas electrode (21). The electrolysis electrode (23) for generating oxygen gas is arranged downstream of the hydrogen gas electrode (21).

## Description

The invention relates to a device for electrochemical measurements in aqueous liquids or liquid mixtures according to the precharacterising part of claim 1.

By aqueous liquids are meant in this application also pure water. Preferably, the invention relates to a device for electrochemical measurements in aqueous liquids which, at elevated pressure and elevated temperature, flow in a flow channel.

By means of electrochemical measurements in aqueous liquids or liquid mixtures, thermodynamic data are obtained, whereby contents can be determined and chemical processes and potentials can be monitored in a reliable manner. With proper equipment, electrochemical measurements can be carried out in aqueous liquids or liquid mixtures at most temperatures. The electrodes used, both measuring electrodes and reference electrodes must be resistant and inert at the temperatures in question in order not to influence, in uncontrolled manner, the measurements or the thermodynamic conditions prevailing during the measurements. With suitable electrodes thermodynamic data can be measured as a function of the temperature. In addition, corrosion potentials as well as the formation and the stability of coorsion-passivating protective films on metals can be monitored. One known and stable reference electrode is the hydrogen gas electrode which in its traditional design comprises a platinum plate immersed into an electrolyte with pH=1, through which hydrogen gas of a pressure of one atmosphere is bubbled, everything being kept at 25°C.

When monitoring corrosion processes in circulation systems in heat-generating power plants, such as nuclear power plants, or coal-fired, oil-fired or gas-fired power plants, in operation, it is important that the electrochemical measurements are carried out in situ under the conditions prevailing in the circulation system with water of high temperature, since solubilities and chemical equilibriums are greatly temperature-dependent and the measurements therefore are not representative if they are carried out under other conditions than those prevailing in the circulation system. It is of decisive importance that the reference electrode used has a known potential in the environment in question and that it is stable and reliable under the conditions, especially the high temperatures, which prevail in the circulation system.

The invention aims at providing a device for electrochemical measurements in aqueous liquids of the above-mentioned kind which is adapted to perform with a simple and stable reference electrode with a known potential, and which device can be used for in-situ measurements in aqueous liquids or liquid mixtures which, at elevated pressure and elevated temperature, flow in a flow channel.

To achieve this aim the invention suggests a device for electrochemical measurements in aqueous liquids according to the introductory part of claim 1, which is characterized by the features of the characterizing part of claim 1.

Further developments of the invention are characterized by the features of the additional claims.

The device according to the invention comprises at least
- one hydrogen gas electrode in the form of an inert metal plate arranged in a flow of water saturated with hydrogen gas, and
- one electrolysis electrode pair, in the form of two inert metal plates connectable to an electric voltage source.

The electrolysis electrode pair is adapted to decompose water while forming hydrogen gas and oxygen gas. The electrolysis electrode for generating hydrogen gas is arranged upstream of the hydrogen gas electrode such that water saturated with hydrogen gas is obtained near the hydrogen gas electrode. The electrolysis electrode for generating oxygen gas is arranged downstream of the hydrogen gas electrode.

By inert metal is meant in this application a metal which does not dissolve under the conditions prevailing in the flowing high temperature water. Suitably, the three electrodes are arranged in the form of plates made of a platinum metal. By platinum metal is meant in this application a metal belonging to the platinum group, an alloy based on such metal, or an alloy of two or more such metals. Especially preferred is platinum.

In one embodiment of the invention, the electrolysis electrode for generation of hydrogen gas and the hydrogen gas electrode are arranged in a side channel connected to the main flow channel. The side channel comprises at least one inlet, one electrode chamber and one outlet. The electrolysis electrode for generating oxygen gas is in this embodiment arranged in the main channel downstream of the outlet to the side channel.

In one embodiment of the invention the electrodes are arranged inserted into an electrically insulating matrix, which preferably forms part of the wall of the flow channel.

In a preferred embodiment, the device according to the invention comprises an electrically insulating matrix adapted to constitute part of the wall of the flow channel and comprising a side channel with an inlet, an electrode chamber and an outlet. By means of the inlet and the outlet the electrode chamber communicates with the flow channel. The hydrogen gas electrode is arranged in the form of a platinum plate in the electrode chamber, the electrolysis electrode for generating hydrogen gas is arranged upstream of the hydrogen gas electrode in the side channel, and the electrolysis electrode for generating oxygen gas is arranged in the flow channel downstream of the outlet. Both the hydrogen gas electrode and the two electrolysis electrodes are arranged inserted into the electrically insulating matrix. This embodiment is especially favourable since the flow of water as well as the distribution of the hydrogen gas in the water can be accurately controlled in the electrode chamber. Also, the risks that the oxygen gas generated by downstream electrolysis electrode will come into contact with the hydrogen gas electrode are eliminated. Preferably, the electrically insulating matrix is arranged in the form of a ceramic matrix.

A device according to the invention is especially advantageous in electrochemical measurements in flow channels which are part of the primary or secondary circuit of a power plant. The device is very simple and stable and is self-calibrating. The potential of the hydrogen gas electrode is easily determined and with stability based on
- the water temperature measured at the hydrogen gas electrode,
- the voltage applied across the electrolysis electrodes, proportional to the generated amount of hydrogen gas, and
- the autoprotolysis of the water.

By way of example, the invention will now be described in greater detail with reference to the accompanying drawings showing in
- Figure 1: a schematic view of a heat-generating power plant with a primary circuit,
- Figure 2: a device according to the invention comprising a hydrogen electrode and an electrolysis electrode pair,
- Figure 3: a preferred embodiment of the invention in which the electrodes are comprised in a ceramic matrix which constitutes part of the wall of the flow channel and comprises a side channel with an inlet, an electrode chamber and an outlet.

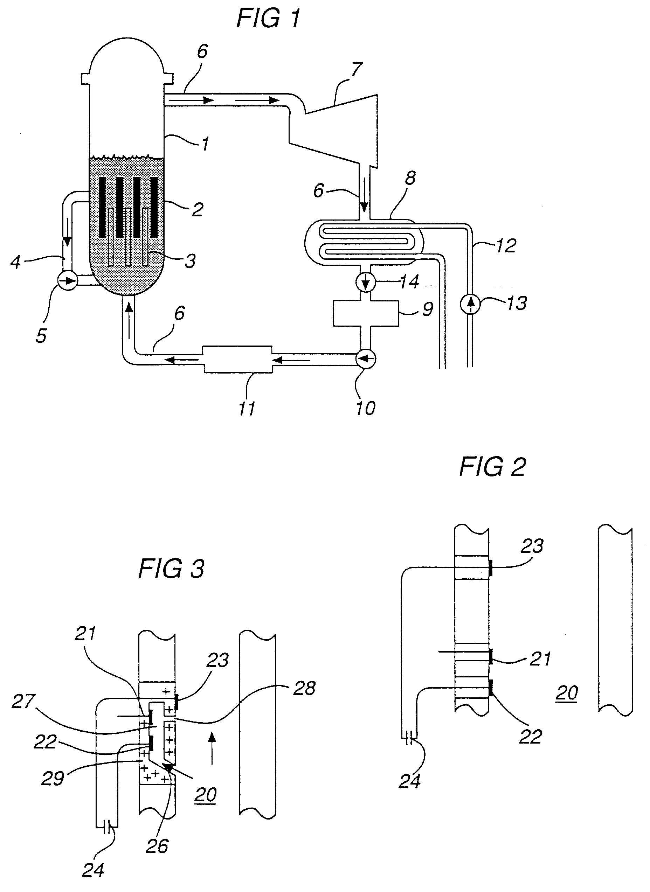

Figure 1 shows a nuclear power plant of boiling-water reactor type with a primary circuit. The boiling water reactor has a reactor vessel 1 with fuel elements 2, control rods 3 and main circulation systems 4, only one of which is shown in Figure 1. Each main circulation system 4 has a pump 5. The main circulation pumps 5 ensure that the reactor core is given sufficient cooling. The reactor vessel 1 is part of a water circulation system 6, which, in addition, comprises a steam turbine 7, a condenser 8, a condensate cleaning filter 9, pumps 10 and 14, and a preheater 11. Steam formed in the reactor core gives its energy to the rotor of the turbine and, after passage of the turbine, is condensed in the condenser 8 with a cooling water circuit 12 comprising a pump 13. The condensate from the condenser 8 is transported by the condenser pump 14 through the condensate cleaning filter 9 and the condensate cleaned therein is fed, after preheating in the preheater 11, into the reactor vessel by means of the feed pump 10. A reference electrode with electrolysis pairs according to the invention is arranged in the water circulation system 6, 4 to determine the corrosion potential of the engineering materials.

A device according to the invention is shown in Figure 2 and comprises at least
- one hydrogen gas electrode 21 arranged in or adjacent to a flow channel 20, included in the water circulation system, in the form of an inert metal plate arranged in a flow of water saturated with hydrogen gas, and
- an electrolysis electrode pair 22, 23 arranged in or adjacent to a flow channel 20, included in the water circulation system, in the form of two inert metal plates 22 and 23, respectively, connected to an voltage source 24.

The electrolysis electrode pair is adapted to decompose water while forming hydrogen gas and oxygen gas. The electrolysis electrode 22, being arranged upstream of the hydrogen gas electrode 21, generates hydrogen gas H₂ such that water saturated with hydrogen gas is obtained near the hydrogen gas electrode 21. The electrolysis electrode 23 for generating oxygen gas O₂ is arranged downstream of the hydrogen gas electrode 21.

In a preferred embodiment of the invention, the electrolysis electrode 22 for generating hydrogen gas H₂, and the hydrogen gas electrode 21 are arranged in a side channel arranged near the flow channel 20. The side channel comprises at least one inlet 26, an electrode chamber 27 and an outlet 28. The electrolysis electrode 23 for generating oxygen gas O₂ is in this embodiment arranged in the main flow channel 20 downstream of the outlet 28 of the side channel.

The electrodes 21, 22, 23 are in one embodiment inserted into an electrically insulating matrix 29, which is adapted to form part of the wall of the flow channel. The matrix 29 comprises a side channel with an inlet 26, an electrode chamber 27 and an outlet 28 and is preferably made of a ceramic material. The electrode chamber 27 communicates, by means of the inlet 26 and the outlet 28, with the flow channel 20. The hydrogen gas electrode 21 is arranged in the form of a platinum plate in the electrode chamber 26, the electrolysis electrode 22 for generating hydrogen gas is arranged upstream of the hydrogen gas electrode 21 in the side channel, and the electrolysis electrode 23 for generating oxygen gas is arranged in the main flow channel 20 downstream of the outlet 28. Both the hydrogen gas electrode 21 and the electrolysis electrodes 22 and 23 are arranged inserted into the matrix 29. This embodiment is especially favourable since the flow of water as well as the distribution of the hydrogen gas in the water can be accurately controlled in the electrode chamber 27. Also, the risks that the oxygen gas generated at electrode 23 comes into contact with the hydrogen gas electrode 21 are eliminated.

In the foregoing, the invention has been described based on use in a primary circuit in a nuclear power plant of boiling-water type, but it is, of course, generally applicable to water circulation systems of any kind.

## Claims

1. A device for electrochemical measurements in aqueous liquids or liquid mixtures, which flow in a flow channel, which device comprises at least one reference electrode (21), preferably a hydrogen gas electrode, which is arranged in the form of an inert metal plate (21) in a flow of water saturated with hydrogen gas, **characterized** in that at least one electrolysis electrode pair, in the form of two inert metal plates (22, 23), are arranged and adapted to be connected to a voltage source (24), that the electrolysis electrode pair (22, 23) is adapted to decompose water while generating hydrogen gas at one electrolysis electrode (22) and oxygen gas at the other electrolysis electrode (23), that the electrolysis electrode (22) for generating hydrogen gas is arranged upstream of the hydrogen gas electrode (21) such that water saturated with hydrogen gas is obtained adjacent the hydrogen gas electrode (21), and that the electrolysis electrode (23) for generating oxygen gas is arranged downstream of the hydrogen gas electrode (21).

2. A device according to claim 1, **characterized** in that the electrodes (22, 21, 23) are arranged in the form of plates made of a platinum metal.

3. A device according to claim 1 or 2, **characterized** in that the electrolysis electrode (22) for generating hydrogen gas, and the hydrogen gas electrode (21) are arranged in a side channel provided adjacent to the main channel (20), said side channel comprising at least one inlet (26), one electrode chamber (27), and one outlet (28), and that the electrolysis electrode (23) for generating oxygen gas is arranged in the main channel downstream of the outlet to the side channel.

4. A device according to any of the preceding claims, **characterized** in that the electrodes (21, 22, 23), arranged in the form of metal plates, are inserted into an electrically insulating matrix (29).

5. A device according to claim 4, **characterized** in that the matrix (29) forms part of the wall of the main channel (20).
